# EUROPÄISCHE PATENTANMELDUNG

(11) **EP 3 542 991 A1**
(43) Veröffentlichungstag der Anmeldung: **25.09.2019**
(21) Anmeldenummer: 18163699.4
(22) Anmeldetag: 23.03.2018
(51) Int. Cl.: B29C 64/118, B33Y 30/00

(54) **FILAMENTVORSCHUB BEI DER ADDITIVEN FERTIGUNG**

(71) Anmelder: Siemens Aktiengesellschaft, 80333 München (DE)
(72) Erfinder: Dürr, Matthias, 90473 Nürnberg (DE)

(57) **Zusammenfassung**

Die Erfindung betrifft eine Vorrichtung (1) zur additiven Fertigung eines Bauteils aufweisend wenigstens ein Förderungselement (2) zur Förderung eines Filaments (3) in Richtung einer Düse (4). Das Förderungselement (2) ist derart ausgebildet, ein Außengewinde (5) im Filament (3) auszubilden. Die Erfindung betrifft ferner einen 3D-Drucker (100) mit einer derartigen Vorrichtung (1) sowie ein Verfahren zur additiven Fertigung eines Bauteils mit einer derartigen Vorrichtung (1).

## Beschreibung

Die Erfindung betrifft eine Vorrichtung zur additiven Fertigung eines Bauteils aufweisend wenigstens ein Förderungselement zur Beförderung eines Filaments in Richtung einer Düse.

Die Patentschrift DE 10 2017 100 170 A1 offenbart ein Verfahren zur Erstellung 3-dimensionaler Werkstücke mit einem 3D-Druckverfahren, bei dem das Werkstück durch Auftragen eines thermoplastischen Werkstoffs aufgebaut wird, bei dem der Rohstoff in Form von Werkstoffdraht (Filament) zugeführt wird. Das offenbarte Verfahren bedient sich hierfür eines Extruders, der mittels Extrudervorschub und Anpressrolle den Vorschub des Filaments in eine Düse des Extruders und damit zum Auftrag auf das Werkstück fördert.

Eine derartige Krafteinleitung erfolgt jedoch auf einer nur sehr kleinen Wirkfläche, insbesondere Reibfläche, und zudem nur einseitig, wodurch das Filament Schaden nehmen oder sich unkontrolliert zwischen dem Extrudervorschub und der Anpressrolle hindurchbewegen kann.

Der Erfindung liegt die Aufgabe zugrunde, eine Vorrichtung zur additiven Fertigung eines Bauteils, insbesondere hinsichtlich eines Vorschubs des Filaments, zu verbessern.

Die Lösung der Aufgabe gelingt durch die Merkmale des Anspruchs 1, d. h. eine Vorrichtung zur additiven Fertigung eines Bauteils aufweisend wenigstens ein Förderungselement zur Förderung eines Filaments in Richtung einer Düse, wobei das Förderungselement derart ausgebildet ist, ein Außengewinde im Filament auszubilden.

Ferner gelingt die Lösung der Aufgabe durch die Merkmale des Anspruchs 12, d. h. einen 3D-Drucker mit einer derartigen Vorrichtung sowie durch die Merkmale des Anspruchs 13, d. h. ein Verfahren zur additiven Fertigung eines Bauteils mit einer derartigen Vorrichtung.

Weitere vorteilhafte Ausführungsformen ergeben sich aus den Unteransprüchen.

Durch die Ausbildung des Außengewindes ist eine kontinuierliche Krafteinleitung in das Filament möglich. Der Vorschub des Filaments in Richtung der Düse ist gleichmäßig. Auf diese Weise kann bei der additiven Fertigung des Bauteils eine genaue Dosierung des Filaments in seiner Form als Werkstoff erreicht werden.

In einer vorteilhaften Ausführungsform der Erfindung ist mittels der Vorrichtung das Außengewinde als gepresstes Außengewinde ausbildbar.

Mittels der Vorrichtung kann das Außengewinde auch als gespantes Außengewinde ausbildbar sein. Jedoch muss hierfür die Vorrichtung ein Element zum Auffangen von Spänen und/oder ein Element zur Aufbewahrung von Spänen und/oder ein Element zur Abführung von Spänen aufweisen.

Gewinde, insbesondere Außengewinde, sind vorzugsweise selbsthemmend ausgeführt. Dies bedeutet, dass auch bei Ausfall einer elektrischen Energieversorgung des Motors das Filament sicher in Position gehalten wird. Bei einem unplanmäßigen Ausfall der Energieversorgung müssen daher keine Schäden am Filament oder der Vorrichtung befürchtet werden, da sich das Filament immer in einer definierten Position befindet. Zudem kann die Selbsthemmung auch zur Energieeinsparung eingesetzt werden. Vorteilhaft wird zur Energieeinsparung der Motor in definierten Abständen gestoppt. Ein Haltestrom, welcher einem In-Position-Halten des Filaments dient, ist nicht nötig.

In einer weiter vorteilhaften Ausführungsform der Erfindung ist das Förderungselement an einem Außenumfang von einem Motor, insbesondere über ein Getriebe, antreibbar.

Vorzugsweise ist am Außenumfang des Förderungselements ein Zahnrad ausgebildet. Vorzugsweise ist dieses Zahnrad mit einem weiteren Zahnrad gepaart, welches, vorzugsweise über eine Welle, von dem Motor antreibbar ist. Die beiden Zahnräder bilden vorzugsweise ein Zahnradgetriebe.

Vorzugsweise sind eine Maschinenachse des Motors und eine Vorschubrichtung des Filaments wenigstens im Wesentlichen parallel. Dies bringt den Vorteil mit sich, dass die Vorrichtung kompakt gebaut werden kann.

Vorzugsweise wird als Motor ein Schrittmotor verwendet. Der Schrittmotor ist vorzugsweise als Synchronmotor ausgeführt, bei dem der Rotor durch ein gesteuertes, schrittweise rotierendes, elektromagnetisches Feld der Statorspulen um einen minimalen Winkel oder sein Vielfaches gedreht werden kann. Jedoch ist auch eine Ausführung als Linear- und/oder Segmentmotor möglich. Auch ein Servomotor, insbesondere mit einem Sensor zur Positionsbestimmung, kann verwendet werden.

Schrittmotoren eignen sich besonders gut, da sie eine hohe Genauigkeit aufweisen. Der Vorschub des Filaments kann daher sehr genau eingestellt werden. Zudem sind Schrittmotoren günstig.

Vorzugsweise weist das Zahnradgetriebe ein hohes Übersetzungsverhältnis auf. Ein kleines Drehmoment des Motors kann somit über eine hohe Drehzahl des Motors kompensiert werden.

Dies hat den Vorteil, dass ein wenig präziser und somit günstiger Motor eingesetzt werden kann. Zudem sind drehmomentschwache Motoren meist kompakt und leicht, wodurch auch die erfindungsgemäße Vorrichtung kompakt und leicht gebaut werden kann.

Ein Positionierfehler aufgrund geringer Präzision kann durch eine hohe Übersetzung geglättet werden. Ferner stellt das im Filament ausgebildete Gewinde, insbesondere Außengewinde, selbst eine hohe Übersetzung zwischen einer Bewegung des Förderungselements und des Filaments dar.

In einer weiteren vorteilhaften Ausführungsform der Erfindung weist das Förderungselement an einem Innenumfang ein Gewindeausbildungselement auf.

Durch die Ausbildung des Außengewindes sind das Filament und das Gewindeausbildungselement formschlüssig miteinander verbunden. Das Filament kann sich daher nicht unkontrolliert bewegen.

In einer weiteren vorteilhaften Ausführungsform der Erfindung weist das Förderungselement Stahl, insbesondere Baustahl und/oder Werkzeugstahl, oder Keramik auf.

Stahl, insbesondere Baustahl und/oder Werkzeugstahl, oder Keramik sind als Konstruktionswerkstoff für das Förderungselement besonders gut geeignet.

Vorzugsweise weist das Förderungselement gehärteten Werkzeugstahl auf. Für ein Filament aus einem weicheren Material kann Baustahl verwendet werden.

Vorzugsweise weist das Förderungselement Siliziumkarbid, Aluminiumoxid und/oder Porzellan auf. Dies hat den Vorteil einer geringen Reibung.

Ferner kann das Förderungselement auch Polytetrafluorethylen, also "Teflon", aufweisen. Insbesondere eine Beschichtung des Förderungselements mit Polytetrafluorethylen dient einer Reibungsreduktion.

Das Förderungselement kann einstückig ausgeführt sein.

Jedoch kann das Förderungselement auch aus einem Zahnrad und einem Gewindeausbildungselement zusammengesetzt sein. Besonders vorteilhaft ist dies, wenn das Zahnrad aus einem anderen Material gefertigt bzw. ein anderes Material beinhalten soll als das Gewindeausbildungselement.

Es ist denkbar, dass das Zahnrad Stahl und das Gewindeausbildungselement Keramik beinhaltet. Das Zahnrad und das Gewindeausbildungselement können, z. B. mittels Klebung, zum Förderungselement vereint werden.

Das Gewindeausbildungselement wie auch das gesamte Förderungselement können an das verwendete bzw. zu verwendende Filament angepasst werden. Zudem gelingt eine Anpassung an andere Prozesskennwerte wie Druck, Geschwindigkeit und Dynamik leicht.

In einer weiteren vorteilhaften Ausführungsform der Erfindung ist eine Einschnitttiefe des Außengewindes in das Filament zunehmend ausbildbar.

Das bedeutet in anderen Worten: Das Gewindeausbildungselement ist so ausgebildet, dass die Einschnitttiefe an einer ersten Stelle weniger tief in das Filament als an einer zweiten Stelle einschneidet (bzw. einpresst). Vorteilhaft ist erst nach wenigstens einem, vorzugsweise zwei oder mehr, Umläufen des Gewindeausbildungselements um das Filament die beabsichtigte Einschnitttiefe erreicht.

Dies hat den Vorteil, dass das Außengewinde schonend ausgebildet werden kann.

Ferner ist ein bidirektionaler Förderungsbetrieb möglich. Dies ist insofern vorteilhaft, als ein Tropfen des Extruders verhindert wird. Das Filament wird hierbei ein Stück weit in eine Richtung, welche einer Förderungsrichtung entgegengesetzt ist, zurückgezogen, wenn nicht extrudiert wird, also wenn z. B. der 3D-Drucker mit der beschriebenen Vorrichtung pausiert und/oder an eine andere Position gefahren wird.

Vorzugsweise ist das Außengewinde als rechtsgängige oder linksgängige Helix mit einer Steigung zwischen 0,25 und 6 ausgeführt. Gut eignen sich Gewinde der Typen (Metrisches ISO-Gewinde) M 2, M 2,5, M 3, M 3,5 oder M 4. Insbesondere M 3 eignet sich besonders gut. Jedoch sind auch andere Gewindetypen und auch andere Formen möglich.

In einer weiteren vorteilhaften Ausführungsform der Erfindung ist die Vorrichtung als 3D-Druckkopf ausgeführt.

Die Vorrichtung kann mit einem 3D-Drucker einstückig ausgeführt sein. Ferner kann sie auch als portabler Druckkopf an den 3D-Drucker ansteckbar ausgeführt sein.

Mittels der Erfindung ist eine leichte und kompakte Bauweise eines 3D-Druckkopfes, insbesondere für einen 3D-Drucker, möglich. Eventuelle Brüche des Filaments können mittels der Erfindung verhindert werden.

Zudem ist es denkbar, die erfindungsgemäße Vorrichtung an andere Maschinen ankoppelbar auszuführen, beispielsweise an eine Werkzeugspindel einer Werkzeugmaschine.

In einer weiteren vorteilhaften Ausführungsform der Erfindung dient die Düse einem Ausgeben des Filaments.

Die Erfindung ermöglicht mittels der Düse ferner eine präzise Dosierung während eines stabilen Förderungsprozesses und bei hohem Druck.

In einer weiteren vorteilhaften Ausführungsform der Erfindung weist die Vorrichtung ein Heizelement zum Erhitzen und/oder Schmelzen des Filaments auf.

Vorteilhaft ist das Heizelement in oder zumindest in unmittelbarer Nähe der Düse ausgeführt. Die Düse gibt vorzugsweise ein geschmolzenes Filament bzw. ein Filament, welches - vorzugsweise mittels des Heizelements - formbar gemacht wurde, aus.

In einer weiteren vorteilhaften Ausführungsform der Erfindung weist die Vorrichtung ein Aufnahmeelement zum Aufnehmen des Filaments auf.

Das Aufnahmeelement nimmt das Filament auf, das beispielsweise als eine Filamentspule aufgewickelt ist.

Vorzugsweise weist das Aufnahmeelement einen Gegenhalter auf. Der Gegenhalter verhindert vorteilhaft, dass sich das Filament bei Ausbilden des Gewindes mitdreht oder verdreht. Der Gegenhalter ist vorteilhaft eine Momentstütze. Beispielsweise ist der Gegenhalter als ein Führungsrollenpaar und/oder als wenigstens ein Steg ausgebildet. Ferner ist auch eine enge Passung denkbar.

In einer weiteren vorteilhaften Ausführungsform der Erfindung weist das Filament Metall oder eine Metalllegierung oder Kunststoff auf.

Als Kunststoff eignen sich z. B. Thermoplaste und/oder Duroplaste.

Als Metalle eignen sich z. B. verschiedene schmelzbare Drähte, Lötzinn, Bronze, Kupfer, Messing, und/oder Aluminium.

Ferner ist auch ein Filament denkbar, welches Holz, Kohlefasern oder Gesteinsmehl aufweist.

Der 3D-Drucker mit der beschriebenen Vorrichtung kann auf verschiedene Weise ausgeführt sein.

Vorteilhaft weist der 3D-Drucker einen Tisch auf, welcher entlang wenigstens einer Achse, vorzugsweise zwei Achsen, verfahrbar ist. Jedoch kann der Tisch auch entlang von drei oder mehr Achsen verfahrbar sein.

Vorteilhaft ist die Vorrichtung entlang wenigstens einer Achse, vorzugsweise zweier Achsen, verfahrbar. Jedoch kann die Vorrichtung auch entlang dreier oder mehrerer Achsen verfahrbar sein.

Die Erfindung bietet den Vorteil einer konstruktiv einfachen Vorrichtung zur additiven Fertigung eines Bauteils. Zudem entfallen komplexe Einstellungen und zeitintensive Ausrichtvorgänge, da vorteilhaft die Maschinenachse des Motors und die Vorschubrichtung des Filaments parallel zueinander angeordnet sind.

Die Vorrichtung ermöglicht zudem ein schnelleres additives Fertigen eines Bauteils.

Das Verfahren zur additiven Fertigung des Bauteils mit der beschriebenen Vorrichtung weist folgende Schritte auf.

Das Filament wird durch das Aufnahmeelement aufgenommen.

Das Förderungselement wird mittels des Motors, vorzugsweise über ein Getriebe, angetrieben. Vorzugsweise weist das Förderungselement an dem Außenumfang ein Zahnrad auf.

Das Außengewinde wird mittels des Förderungselements ausgebildet. Vorzugsweise wird das Außengewinde mittels des Gewindeausbildungselements ausgebildet, welches vorteilhaft am Innenumfang des Förderungselements ausgebildet ist.

Mittels des Förderungselements wird eine Zugkraft auf das Filament aufgebracht. In anderen Worten bedeutet dies: Das Filament wird, insbesondere mit hohem Druck, in Richtung der Düse geführt. Die Zugkraft ist vorzugsweise eine axiale Druckkraft.

Auf diese Weise wir das Filament in Richtung der Düse gefördert.

Das Filament wird erwärmt und/oder geschmolzen mittels des Heizelements.

Das Filament wird von der Düse ausgegeben.

In einer weiteren vorteilhaften Ausführungsform der Erfindung ist das Außengewinde pressend ausgebildet.

Das Außengewinde kann jedoch auch spanend ausgebildet werden.

In einer weiteren vorteilhaften Ausführungsform der Erfindung wird das Bauteil schichtweise gefertigt.

Die Erfindung eignet sich besonders gut für eine additive Fertigung mittels Schmelzschichtung, insbesondere Fused Deposition Modeling (FDM) oder Fused Filament Fabrication (FFF).

Mittels der Erfindung ist die additive Fertigung eines Bauteils auf Basis von herkömmlichen Filamenten möglich. Das verwendete Filament muss keine besonderen Eigenschaften, beispielsweise bezüglich Länge oder Textur, aufweisen.

Ein Kunde kann ein konventionelles Filament, beispielsweise aufgewickelt auf einer Rolle oder aufgewickelt zu einer Rolle, einsetzen, was Kosten und Zeit spart.

Im Folgenden wird die Erfindung anhand der in den Figuren dargestellten Ausführungsbeispiele näher beschrieben und erläutert. Es zeigen:
- FIG 1: eine erfindungsgemäße Vorrichtung 1 zur additiven Fertigung eines Bauteils,
- FIG 2: eine mögliche Ausgestaltung eines 3D-Druckers,
- FIG 3: einen möglichen Ablauf des erfindungsgemäßen Verfahrens.

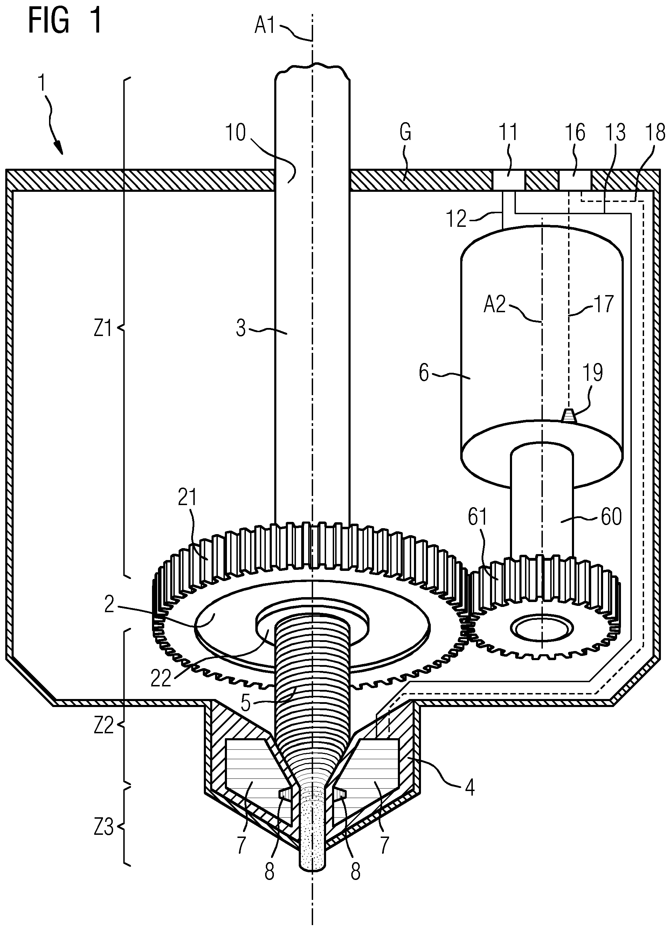

FIG 1 zeigt eine erfindungsgemäße Vorrichtung 1 zur additiven Fertigung eines Bauteils.

Vorteilhaft wird die erfindungsgemäße Vorrichtung als 3D-Druckkopf eingesetzt. Die Vorrichtung ist in der Figur von einem Gehäuse G eingehaust.

Die Vorrichtung 1 weist ein Förderungselement 2 zur Förderung eines Filaments 3 in Richtung einer Düse 4 auf. Das Förderungselement 2 bildet in der Figur ein Außengewinde 5 im Filament 3 aus.

Das Außengewinde 5 ist in der Figur als gepresstes Außengewinde ausgebildet.

Es ist auch eine spanende Bearbeitung des Filaments 3 durch das Förderungselement 2 und somit ein gespantes Außengewinde möglich. Jedoch muss hierfür in der Vorrichtung ein Element zum Auffangen von Spänen und/oder ein Element zur Aufbewahrung von Spänen und/oder ein Element zur Abführung von Spänen vorgesehen werden (nicht in der Figur gezeigt).

Das Förderungselement 2 ist an einem Außenumfang von einem Motor, insbesondere über ein Getriebe, antreibbar. Der Außenumfang ist als Zahnrad 21 ausgeführt. Das Zahnrad 21 ist mit einem Zahnrad 61 gepaart.

Das Zahnrad 61 ist über eine Welle 60 mit einem Motor 6, insbesondere einem Schrittmotor, verbunden.

Die beiden Zahnräder 21 und 22 bilden ein Zahnradgetriebe zur Kraftübertragung vom Motor 6 auf das Förderungselement 2.

Die Achse A1 des Förderungselements 2 und die Achse A2 des Motors 6 sind in der Figur parallel.

Das Förderungselement 2 weist an einem Innenumfang ein Gewindeausbildungselement 22, insbesondere einen pressenden oder spanenden Gewindeschneider, auf. Durch die Ausbildung des Außengewindes 5 auf dem Filament 3 wird eine Zugkraft auf das Filament 3 aufgebracht, sodass das Filament 3 von einem Aufnahmeelement 10 in Richtung der Düse 4 gefördert wird.

Das Förderungselement 2 kann einstückig ausgeführt sein.

Jedoch kann das Förderungselement 2 auch aus dem Zahnrad 21 und dem Gewindeausbildungselement 22 zusammengesetzt sein. Besonders vorteilhaft ist dies, wenn das Zahnrad 21 aus einem anderen Material gefertigt bzw. ein anderes Material beinhalten soll als das Gewindeausbildungselement 22.

Es ist denkbar, dass das Zahnrad 21 Stahl und das Gewindeausbildungselement 22 Keramik beinhaltet. Das Zahnrad 21 und das Gewindeausbildungselement 22 können, z. B. mittels Klebung, zum Förderungselement 2 vereint werden.

Eine Einschnitttiefe des Gewindeausbildungselements 22 kann von einem Ende zu einem anderen zunehmen.

Die Düse 4 weist in der Figur ein Heizelement 7 zum Erhitzen und/oder Schmelzen des Filaments auf.

Mittels der Düse 4 wird das Filament 3 - nun geschmolzen und formbar - ausgegeben.

Das Förderungselement 2 erlaubt eine genaue Dosierung des zur additiven Fertigung eines Bauteils zu schmelzenden Filaments 3.

Die Figur zeigt zudem eine Schnittstelle 11 zur Versorgung des Motors 6 (über eine Leitung 12) sowie zur Versorgung des Heizelements 7 (über eine Leitung 13) mit elektrischer Energie.

Die Figur zeigt zudem eine optionale Kommunikationsschnittstelle 16. Diese dient beispielsweise einer Kommunikation mit einer übergeordneten Steuerung (nicht in der Figur gezeigt) und ermöglicht ein Abrufen von Daten eines optionalen Sensors 8 im Heizelement 7 (über eine Kommunikationsleitung 18) - z. B. aktuelle Temperaturwerte - und/oder eines optionalen Sensors 19 am Motor 6 - z. B. aktuelle Drehzahl, Position bzw. Stellung (über eine Kommunikationsleitung 17).

Ferner ist auch eine Steuerung von Motor und/oder Heizelement über die Kommunikationsschnittstelle 16 und die jeweilige Kommunikationsleitung 17 bzw. 18 denkbar.

Die Figur zeigt zudem drei wesentliche Zustände des Filaments: Z1 zeigt den ursprünglichen Zustand des Filaments 3, Z2 zeigt das bearbeitete Filament 3 mit Außengewinde 5 und Z3 zeigt das geschmolzene Filament 3.

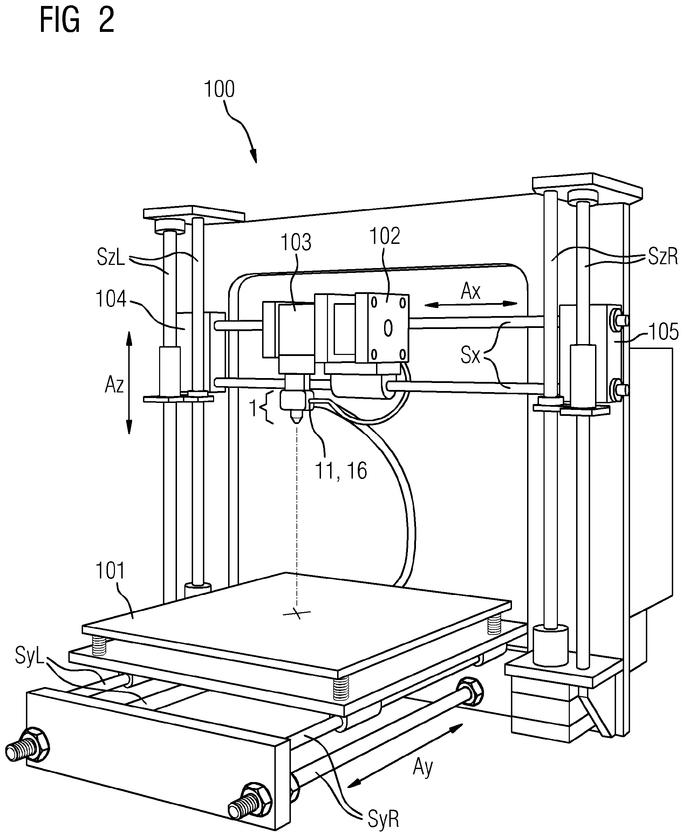

FIG 2 zeigt eine mögliche Ausgestaltung eines 3D-Druckers 100.

Der 3D-Drucker weist eine erfindungsgemäße Vorrichtung 1 auf, die in der Figur als 3D-Druckkopf ausgeführt ist.

Die Vorrichtung 1 kann beispielsweise entlang einer x-Achse Ax (wenigstens im Wesentlichen parallel zur Erdoberfläche) und einer z-Achse Az (wenigstens im Wesentlichen vertikal zur Erdoberfläche) verfahren werden. Ein Arbeitstisch 101, auf welchem das Bauteil gedruckt wird, kann beispielsweise entlang einer y-Achse Ay (wenigstens im Wesentlichen parallel zur Erdoberfläche, aber in einem Winkel von ca. 90° zur x-Achse) verfahren werden. Jedoch ist auch ein Verfahren entlang anderer Achsen möglich. Ferner kann auch das Verfahren entlang der x-Achse, der y-Achse und der z-Achse anders auf Vorrichtung 1 und Arbeitstisch 101 verteilt sein.

Die Vorrichtung 1 ist in der Figur mit einem Antrieb 102 verbunden, welcher das Verfahren entlang der x-Achse Ax in der Figur auf einem Stangenpaar Sx (auch nur eine Stange ist denkbar) ermöglicht.

Ferner ist die Vorrichtung 1 mit einem Filamentlager 103 verbunden. Das Filament kann im Filamentlager beispielsweise aufgewickelt als Filamentspule oder auf einer Rolle aufgewickelt vorliegen.

Ein Antrieb 104 und ein Antrieb 105 können in der Figur das Stangenpaar Sx entlang der z-Achse Az entlang des Stangenpaars SzL bzw. SzR verfahren.

Wenigstens ein Antrieb (in der Figur nicht gezeigt) kann den Arbeitstisch 101 entlang der y-Achse Ay auf einem Stangenpaar SyL und SyR verfahren.

Die Antriebe sind vorteilhaft mit einer Steuereinheit verbunden.

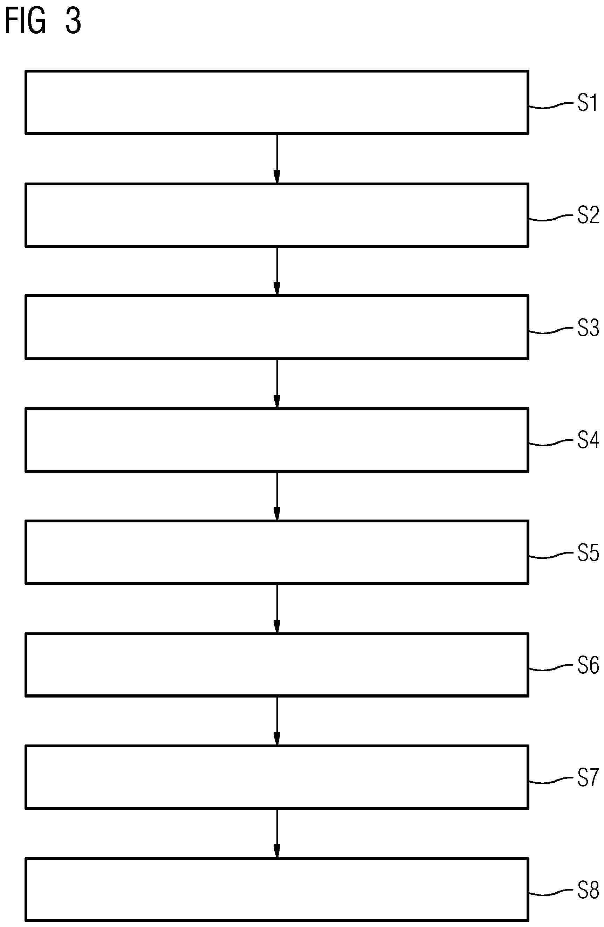

FIG 3 zeigt einen möglichen Ablauf des erfindungsgemäßen Verfahrens.

In einem Verfahrensschritt S1 wird das Filament durch das Aufnahmeelement aufgenommen.

In einem Verfahrensschritt S2 wird das Förderungselement mittels des Motors angetrieben, vorzugsweise über ein Getriebe. Vorteilhaft ist das Getriebe ein Zahnradgetriebe.

In einem Verfahrensschritt S3 wird das Außengewinde mittels des Förderungselements, insbesondere mittels des Gewindeausbildungselements, ausgebildet, wodurch in einem Verfahrensschritt S4 eine Zugkraft auf das Filament mittels des Förderungselements aufgebracht wird.

In einem Verfahrensschritt S5 wird das Filament in Richtung der Düse gefördert.

In einem Verfahrensschritt S6 wird das Filament mittels des Heizelements erwärmt und/oder geschmolzen.

In einem Verfahrensschritt S7 folgt das Ausgeben des Filaments mittels der Düse. Das Filament wird hierbei vorteilhaft definiert und gemäß einer Vorgabe zur Bauteilfertigung abgelegt.

In einem Verfahrensschritt S8 wird das Bauteil fertig gestellt.

Das Außengewinde wird im beschriebenen Verfahren vorzugsweise pressend ausgebildet.

Vorzugsweise erfolgt die Fertigung des Bauteils schichtweise.

Vorteilhaft wird das Ausgeben des Filaments während der Fertigung nicht gestoppt, sondern die Vorrichtung, vorzugsweise als Druckkopf ausgeführt, wird auf wenigstens einer Achse verfahren.

Die Vorrichtung kann beispielsweise entlang der x-Achse und der z-Achse verfahren werden. Der Arbeitstisch, auf welchem das Bauteil gedruckt wird, kann beispielsweise entlang der y-Achse verfahren werden. Jedoch ist auch ein Verfahren entlang anderer Achsen möglich. Ferner kann auch das Verfahren entlang der x-Achse, der y-Achse und der z-Achse anders auf Vorrichtung und Arbeitstisch verteilt sein.

Durch das Verfahren entlang der z-Achse (egal ob die Vorrichtung oder der Tisch verfahren wird) kann die schichtweise Fertigung des Bauteils bewerkstelligt werden.

## Patentansprüche

1. Vorrichtung (1) zur additiven Fertigung eines Bauteils aufweisend wenigstens ein Förderungselement (2) zur Förderung eines Filaments (3) in Richtung einer Düse, **dadurch gekennzeichnet, dass** das Förderungselement (2) derart ausgebildet ist, ein Außengewinde (5) im Filament (3) auszubilden.

2. Vorrichtung (1) nach Anspruch 1, wobei mittels der Vorrichtung (1) das Außengewinde (5) als gepresstes Außengewinde ausbildbar ist.

3. Vorrichtung (1) nach einem der vorhergehenden Ansprüche, wobei das Förderungselement (2) an einem Außenumfang von einem Motor (6), insbesondere über ein Getriebe, antreibbar ist.

4. Vorrichtung (1) nach einem der vorhergehenden Ansprüche, wobei das Förderungselement (2) an einem Innenumfang ein Gewindeausbildungselement (22) aufweist.

5. Vorrichtung (1) nach einem der vorhergehenden Ansprüche, wobei eine Einschnitttiefe des Außengewindes (5) in das Filament (3) zunehmend ausbildbar ist.

6. Vorrichtung (1) nach einem der vorhergehenden Ansprüche, wobei die Vorrichtung (1) als 3D-Druckkopf ausgeführt ist.

7. Vorrichtung (1) nach einem der vorhergehenden Ansprüche, wobei die Düse (4) einem Ausgeben des Filaments (3) dient.

8. Vorrichtung (1) nach einem der vorhergehenden Ansprüche, wobei die Vorrichtung (1) ein Heizelement (7) zum Erhitzen und/oder Schmelzen des Filaments (3) aufweist.

9. Vorrichtung (1) nach einem der vorhergehenden Ansprüche, wobei das Förderungselement (2) Stahl, insbesondere Baustahl und/oder Werkzeugstahl, oder Keramik aufweist.

10. Vorrichtung (1) nach einem der vorhergehenden Ansprüche, wobei die Vorrichtung (1) ein Aufnahmeelement (10) zum Aufnehmen des Filaments (3) aufweist.

11. Vorrichtung (1) nach einem der vorhergehenden Ansprüche, wobei das Filament (3) Metall oder eine Metalllegierung oder Kunststoff aufweist.

12. 3D-Drucker (100) mit einer Vorrichtung (1) nach einem der Ansprüche 1 bis 11.

13. Verfahren zur additiven Fertigung eines Bauteils mit einer Vorrichtung (1) nach einem der Ansprüche 1 bis 10 mit folgenden Schritten:
- Aufnehmen des Filaments (3) durch das Aufnahmeelement (10),
- Antreiben des Förderungselements (2) mittels des Motors (6), vorzugsweise über ein Getriebe,
- Ausbilden des Außengewindes (5) mittels des Förderungselements (2),
- Aufbringen einer Zugkraft auf das Filament (3) mittels des Förderungselements (2),
- Förderung des Filaments (3) in Richtung der Düse (4),
- Erwärmen und/oder Schmelzen des Filaments (3) mittels des Heizelements (8),
- Ausgeben des Filaments (3) mittels der Düse (4).

14. Verfahren nach Anspruch 13, wobei das Außengewinde (5) pressend ausgebildet wird.

15. Verfahren nach einem der Ansprüche 13 oder 14, wobei das Bauteil schichtweise gefertigt wird.
